# EUROPEAN PATENT APPLICATION

(11) **EP 1 892 135 A1**
(43) Date of publication of application: **27.02.2008**
(21) Application number: 07010670.3
(22) Date of filing: 30.05.2007
(51) Int. Cl.: B60J 7/14

(54) **A retractable roof and a vehicle so equipped**

(30) Priority: 30.05.2006 JP 2006149359
(71) Applicant: Webasto AG, 82131 Stockdorf (DE)
(72) Inventor: Odoi, Kozol, Higashihiroshima-City, 739-0038 (JP); Okamura, Minoru, Higashihiroshima-City, 739-0038 (JP)

(57) **Abstract**

A retractable roof comprises a roof member (2) that includes a front roof panel (21), middle roof panel (24), and back window (23), and a link mechanism that changes the position of the roof member (2) between an operating position and a storage position, and maintains the seal between the middle roof panel (24) and back window (23) in the operating position.

A locking member (5) is provided on the middle roof panel (24) that, when the roof member (2) is in the operating position, applies a force to the side of the back window (23) that is tightly sealed against the middle roof panel (24), by engaging rear window connecting links (45,48) that cause the rear window (23) to move relative to the middle roof panel (24).

## Description

### Technical Field.

This invention relates to a retractable roof and a vehicle so equipped.

### Technical Background.

For example, Patent Reference #1 discloses a retractable roof that can change its position between an operating position that covers the vehicle passenger compartment and a storage position where it is stored in a storage compartment while the vehicle passenger compartment is open.

The retractable roof disclosed in this patent reference has a roof member and a link mechanism, and the roof member has a three-part construction, consisting of a front roof panel that covers the top of the vehicle passenger compartment, a rear window that is located behind the front roof panel and covers the back of the vehicle passenger compartment, and a middle roof panel that is located between the front roof panel and rear window.

This retractable roof uses the link mechanism to change its position between the operating position where the roof member covers the vehicle passenger compartment and the storage position in which the front roof panel, middle roof panel, and rear window are folded on top of one another and stored in the storage compartment. When the roof member changes its position the rear window moves relative to the middle roof panel.
Patent Reference #1. European Patent Number 1385711,

### Specification.

### Invention Disclosure.

### Problem That the Invention Tries to Solve.

However, a retractable roof with this so-called three-part roof member has weatherstripping between the front roof panel and the middle roof panel, and between the middle roof panel and the rear window, and when the retractable roof is in the operating position (the operating configuration) the reaction of the weatherstripping generates a force on the edge of the rear window opposite from the middle roof panel. Also, the comparatively heavy rear window's own weight acts on the edge in a direction that is opposite that of the middle roof panel. Therefore, especially if the link mechanism is not very strong, when the roof member is in the operating configuration this may lessen the seal between the middle roof panel and the rear window.

The present invention was conceived with this problem in mind, and its purpose is to maintain the seal between the middle roof panel and the rear window when the retractable roof is in the operating configuration.

### Means for Solving the Problem.

The retractable roof of this invention contains a roof member that covers the vehicle passenger compartment and a link mechanism that changes the position of the roof member between the operating position where the roof member covers the vehicle passenger compartment and the storage position in which it is stored in the storage compartment located behind the vehicle passenger compartment while the vehicle passenger compartment is open.

The roof member includes a front roof panel that covers the top of the vehicle passenger compartment, a rear window that is located behind the front roof panel and covers the back of the vehicle passenger compartment, and a middle roof panel that is located between the front roof panel and rear window, and weatherstripping is provided between the front roof panel and middle roof panel, and between the middle roof panel and rear window.

Also, the link mechanism includes a rear window connecting link that is directly or indirectly coupled to the rear window and, when the position of the roof member changes between the operating position and storage position, this rear window coupling link moves the rear window relative to the middle roof panel, and there is a locking member that is fixed directly or indirectly to the middle roof panel and that, when the roof member is in the operating position, moves as a unit with the middle roof panel and engaging the rear window connecting link, so as to apply a force to the side of the rear window that is tightly sealed against the middle roof panel.

By having this structure, with a roof member that has a three-part construction consisting of a front roof panel, middle roof panel, and rear window, the rear window connecting link is able to move the back window relative to the middle roof panel when the roof member changes its position between the operating position and the storage position.

And, when the roof member is in the operating position, the locking member that is provided on the middle roof panel engages the rear window connecting link, applying a force to the side of the rear window that is tightly sealed against the middle roof panel.

Therefore this works against the reaction of the weatherstripping and the weight of the rear window, so that the rear window is tightly sealed against the middle roof panel, maintaining the seal between the middle roof panel and the rear window.

It is possible for the link mechanism to include window link levers that are connected with pivoting supports to the rear window and to a member on the vehicle body, a pair of link levers that form a four-way link that is connected with a pivoting support to said rear window and middle roof panel, and a control link that is connected with a pivoting support to one of the pair of link levers or to the rear window, and the locking member engages the control link, thereby contributing a moment around an axis in the width direction of the vehicle to the control link, so that it applies a force to the rear window side of the control link against the side of the rear window that is tightly sealed against the middle roof panel, while also applying a force to the side of the control link that is on the front roof panel against the side of the front roof panel that is tightly sealed against the middle roof panel.

This structure forms part of a four-way link that uses the window link lever, the rear window, the pair of link levers, and the control link to connect the member on the vehicle body with the front roof panel, moving the front roof panel relative to the member on the vehicle body. The link mechanism includes a separate four-way link between the rear window and the middle roof panel, so that the link's rigidity is relatively small. Therefore, in the operating position, it would be easy for the seal to lessen between the middle roof panel and the rear window.

However, in the operating position, the locking member engages the control link, contributing a moment to this control link, so that the rear window side of the control link applies a force to the side of the rear window that is tightly sealed against the middle roof panel. Therefore, as explained above, this works against the reaction of the weatherstripping and the weight of the rear window, so that the rear window is tightly sealed against the middle roof panel, maintaining the seal between the middle roof panel and the rear window.

And, the front roof panel side of the control link applies a force to the side of the front roof panel that is tightly sealed against the middle roof panel, so that the front roof panel is tightly sealed against the middle roof panel, maintaining the seal between the front roof panel and the middle roof panel.

In other words, as explained above, if no moment were contributed to the control link, and the control link were to move parallel to the side of the rear window that is tightly sealed against the middle roof panel, there would be the possibility that the front roof panel, which is connected to the control link, would be acted upon by a force in the opposite direction from the middle roof panel. However, as explained above, since a moment is contributed to the control link, the front roof panel is acted upon by a force on the side of the middle roof panel, while the rear window is acted upon by a force on the side of the middle roof panel. Therefore, just by engaging the locking member with a single link (the control link), it is possible to maintain both the seal between the front roof panel and the middle roof panel, and the seal between the middle roof panel and the rear window, and this is effective for reducing the number of parts and simplifying the link structure.

Also, it is possible for the middle roof panel to be connected with pivoting supports to the front roof panel and to a member on the vehicle body.

In this way, part of a four-way link is constructed, which connects the middle roof panel, front roof panel, and member on the vehicle body, and restricts the motion of the front roof panel relative to the member on the vehicle body. Therefore, the link lever that extend into the vehicle passenger compartment when the roof member is in the operating position has been eliminated, and to that extent the vehicle passenger compartment is enlarged, both vertically and sideways.

The locking member may also include a hook that engages a pin #1 located on the rear window side of the control link and that pulls pin #1 upward, as well as a cam that engages a pin #2 location on the front roof panel side of the control link and that pushes pin #2 downward.

In this way, the hook and cam make it possible to contribute a moment to the control link. And, the locking member that includes the hook and cam is fixed on the middle roof panel side so as to be hard to see from the vehicle passenger compartment, and therefore when the position of the roof member changes only the pins are attached to the control link that moves across the vehicle passenger compartment, which reduces the extent to which it detracts from its appearance.

As explained above, in a vehicle that has this retractable roof, when the roof member is in the operating position the rear window applies a force to the middle roof panel, improving the seal.

### Effect of the Invention

As explained above, with the retractable roof of this invention, and a vehicle that is so equipped, there is provided a locking member that engages a rear window connecting link when in the operating configuration, thereby applying a force to the rear window on the side that is tightly sealed against the middle roof panel, so that it can maintain the seal between the middle roof panel and the rear window.

### Simple Explanation of the Figures

Figure 1. Side view of a vehicle with the retractable roof in the operating position.
Figure 2. Side view of a vehicle with the retractable roof in the storage position.
Figure 3. Side view that shows the link mechanism of a retractable roof in the operating position.
Figure 4. Decomposed strabismus view of the link mechanism.
Figure 5. Side view showing the structure of the separated links.
Figure 6. Cross-section along VI-VI of Figure 5.
Figure 7. Side view showing the link structure of a retractable roof in a position between the operating position and the storage position.
Figure 8. Side view showing the link structure of a retractable roof in a position between the operating position and the storage position.
Figure 9. Side view that shows the link mechanism of a retractable roof in the storage position.
Figure 10. Diagram that is an enlarged view of the parts of the retractable roof in the operating position to which the locking member is attached.

### Best Form for Implementing the Invention

Next we will use figures to give a detailed explanation of an embodiment of this invention. However, the following explanation of a desirable embodiment is essentially just an example, and it is not the intention to limit this invention to such a purpose or application.

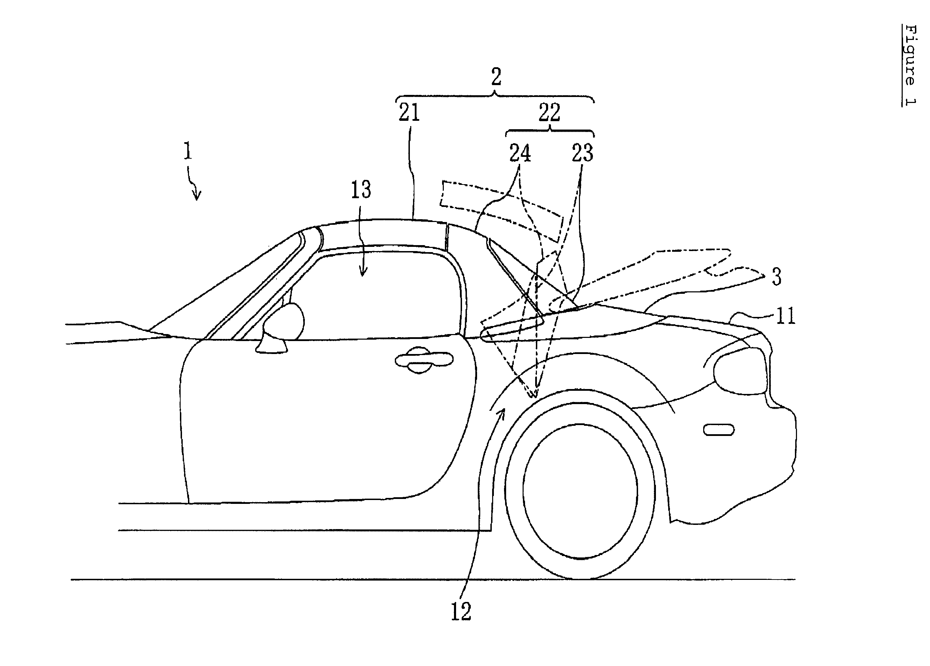

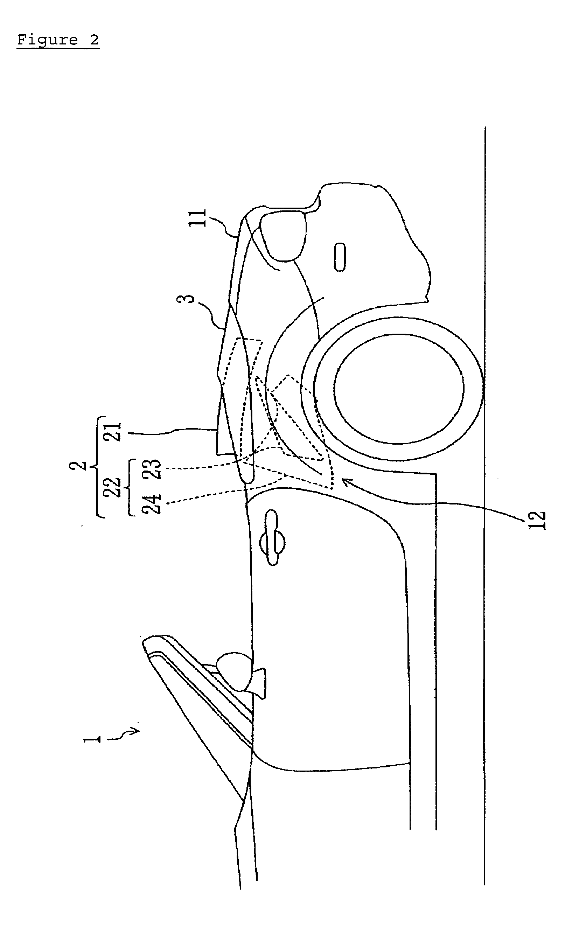

Figures 1 and 2 are representative side views of a vehicle [1] that has a retractable roof of this invention. The retractable roof (roof member) [2] includes a front roof panel [21] that covers the top of the vehicle passenger compartment and a rear roof panel [22] that is located behind the front roof panel [21] and covers the back of the vehicle passenger compartment. The rear roof panel [22] includes a rear window [23] made of a transparent material and a middle roof panel [24] that is located between the front roof panel [21] and rear window [23], forming the pillars of the vehicle [1].

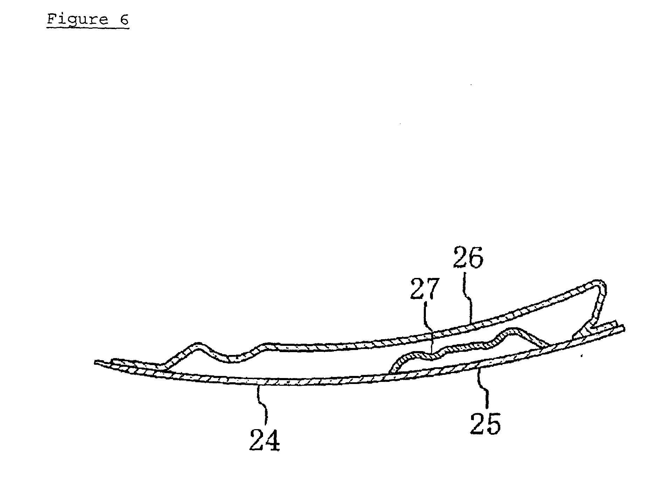

The front roof panel [21] and middle roof panel [24] are formed by combining respective outer panels [25] that form the outer surface of the roof, and inner panels [26] that are on the vehicle passenger side of the outer panels [25]. As needed, plate-shaped reinforcing members [27] are provided between the outer panels [25] and inner panels [26] (see Figure 6). The outer panels [25] and inner panels [26] may be made of resins, for example, while the reinforcing members [27] are metal. This is done to make the retractable roof lightweight.

Trunk space is provided in the rear of the vehicle [1], and its opening is covered by a trunk lid [11] that can be opened and closed. Between the vehicle passenger compartment [13] and the trunk space there is a storage compartment [12] that is open at the top and in which the retractable roof [2] is stored.

A deck lid [3] is provided for the opening at the top of the storage compartment [12]. When the retractable roof [2] is covering the vehicle passenger compartment [13] (so that the roof [2] is in the operating position described later), the deck lid [3] is positioned between the rear edge of the roof [2] and the edge of the opening of the storage compartment [12]. In this way the deck lid [3] covers the opening at the top of the storage compartment [12], which opens at the top in that location.

By using a link mechanism that is not shown in Figures 1 and 2, the retractable roof [2] can change its position between an operating position (see Figure 1) where it covers the vehicle passenger compartment [13], and a storage position (see Figure 2) where it is stored in the storage compartment and the vehicle passenger compartment [13] is open. And, the deck lid [3] uses a link mechanism (not shown), separate from the link mechanism that changes the position of the retractable roof [2], to change its position between an operating position (see Figures 1 and 2) where it covers part of the opening at the top of the storage compartment [12], and a removed position (see the broken line in Figure 1) in which it has been removed diagonally upward behind the operating position while the opening at the top of the storage compartment [12] is open.

Next we will use Figures 1 and 2 to provide a simple explanation of the operation that changes the position of the retractable roof [2], namely, the operation of switching from the state where the retractable roof [2] covers the vehicle passenger compartment [13] to the state where the vehicle passenger compartment [13] is open. First, the deck lid [3] uses its link mechanism to move from the operating position shown by solid lines in Figure 1 to the removed position shown by broken lines, opening the top of the storage compartment [12]. At the same time, the link mechanism of the retractable roof [2] operates, so that the middle roof panel [24] rotates toward the rear around a certain axis of rotation (rotating in the clockwise direction in Figure 1), and the front roof panel [21] slides diagonally upward toward the rear. Also, the rear window [23] moves forward relative to the middle roof panel [24] while moving upward (see the dotted lines in Figure 1).

The dotted lines in Figure 2 show that, as the operation of the link mechanism of the retractable roof [2] continues, the front roof panel [21] and middle roof panel [24] are folded one on top of the other and stored in the storage compartment [12]. At this time the rear window [23] lies on top of the middle roof panel [24], as seen along an axis that extends in the width direction of the vehicle (as seen in Figure 2).

After the retractable roof [2] is stored in the storage compartment [12], the deck lid [3] uses its link mechanism to move from the removed position to the operating position where it covers part of the storage compartment [12]. In this way, the vehicle passenger compartment [13] is opened.

The operation of returning the retractable roof [2] from the state where the vehicle passenger compartment [13] is open to the state where it covers the vehicle passenger compartment [13] is the opposite of what was described above.

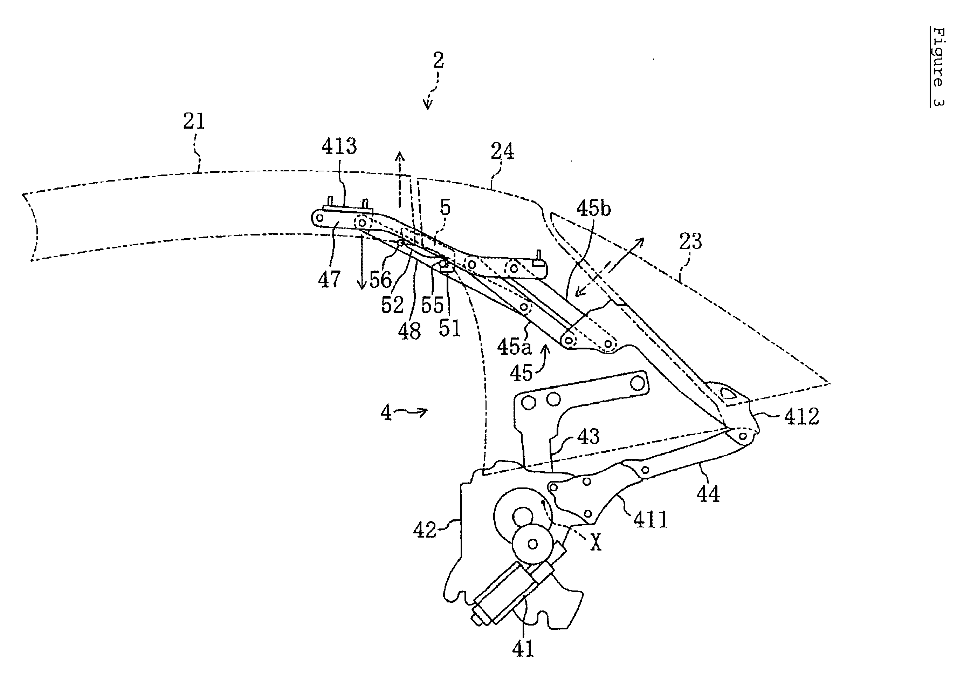

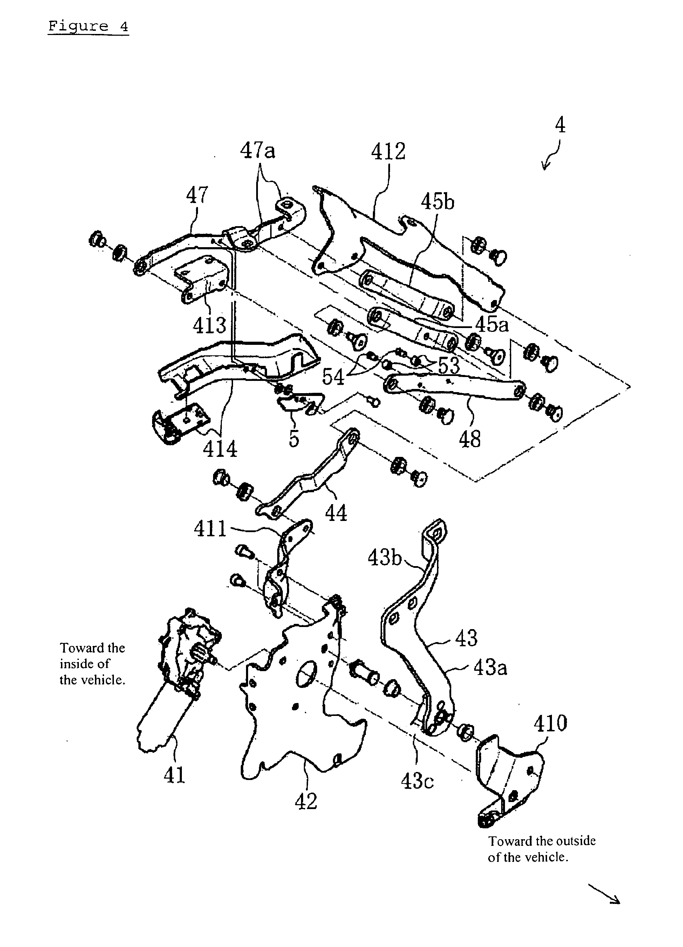

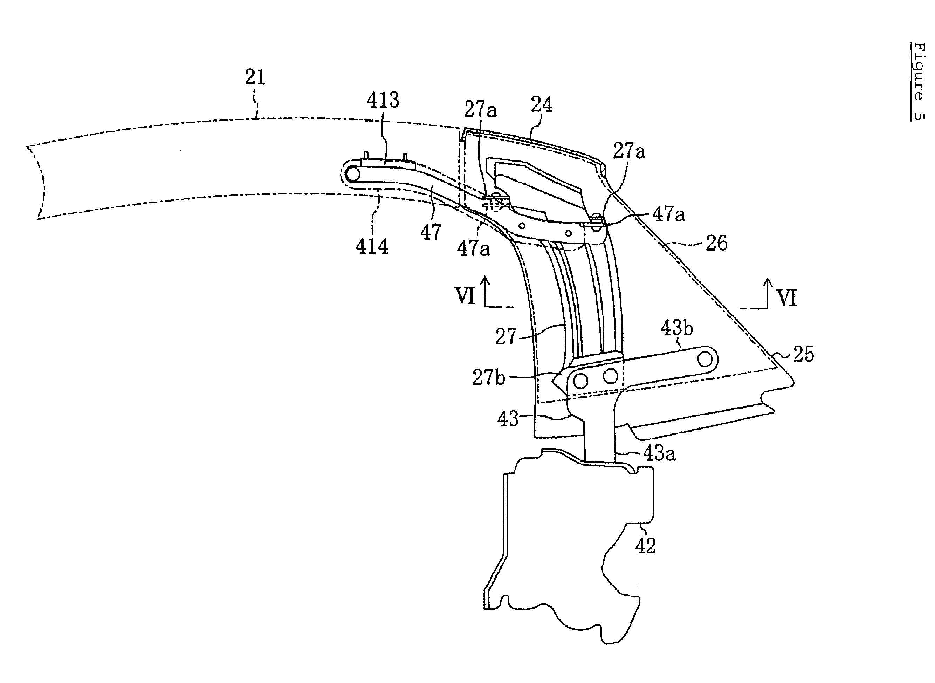

Figures 3 through 5 show the link mechanism [4] of the retractable roof [2]. The link mechanism [4] is inside the retractable roof [2], arranged on both sides in the width direction of the vehicle. Figures 3 and 5 are side views, looking at the link mechanism [4] on the right side of the vehicle from the left side of the vehicle [1], and Figure 4 is a strabismus view that shows the decomposed link mechanism [4] on the left side in the width direction of the vehicle.

The link mechanism [4] is connected by a pivoting support to the front roof panel [21] and includes a four-way link composed of pins #1 and #2 that are connected by pivoting supports to a member inside the vehicle.

The link mechanism [4] in this embodiment is electrically driven. The drive motor [41] that provides the driving force is fixed by a method such as bolts to a main bracket [42] that is fixed to the vehicle [1]. The main bracket [42] is a shortened plate located within the vehicle passenger compartment [12]. In this way the main bracket [42] is located in a position corresponding to the lower extent of the middle roof panel [24] when the retractable roof [2] is in its operating position.

Attached to the side of the main bracket [42] facing the outside of the vehicle is a lower arm [43]. The lower arm [43] is held between the main bracket [42] and a base plate [410] so that it is possible for it to rotate around an axis of rotation X that extends in the width direction of the vehicle, relative to the main bracket [42].

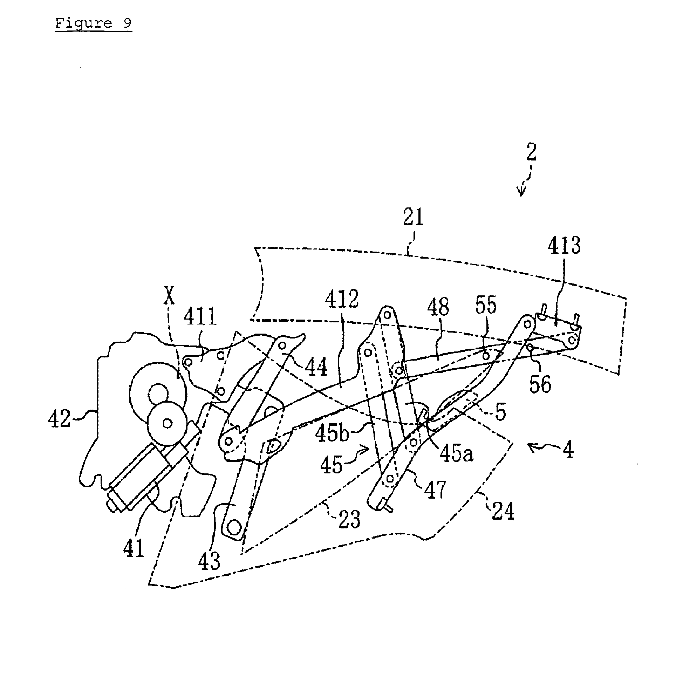

The lower arm [43] has an arm portion [43a] that extends vertically, and a fixing portion [43b] that curves around the top of the arm portion [43a] and is fixed to the middle roof panel [24], as will be described later. Also, fixed to the bottom edge portion of the arm portion [43a] is a deceleration gear [43c] that meshes with a drive gear that is attached to the drive shaft of the drive motor [41]. In this way, while being driven by the drive motor [41], the lower arm [43] rotates around the axis of rotation X, between a position where the arm portion [43a] is upright, as shown in Figure 3, and a position where the arm portion [43a] has moved back, shown in Figure 9.

Also fixed to the main bracket [42] is a window bracket base [411] that extends backward in an upper diagonal direction, from the rear portion near the top of the main bracket [42]. A window link lever [44] is connected by a pivoting support to the rear portion of the window bracket base [411].

Through holes are formed in the front portion and rear portion of the window link lever [44]. A bushing is inserted into the through hole at the front portion of the window link lever [44], and it is fixed to the rear portion of the window bracket base [411] by a method such as a bolt. In this way, the window link lever [44] can rotate around an axis of rotation that extends in the width direction of the vehicle, relative to the window bracket base [411].

Window brackets [412] are fixed at both ends of the rear window [23] in the width direction of the vehicle. The rear portion of each window link lever [44] is attached by a pivoting support to the lower portion of the window bracket [412]. In other words, the window link lever [44] has a bushing inserted into the through hole at its rear portion, and is fixed to the lower portion of the window bracket [412] by a method such as a bolt. In this way, the window link lever [44] rotates with respect to an axis that extends in the width direction of the vehicle around the window bracket [412], or in other words, around the rear window [23] .

Two attachment holes are provided at a certain interval in the front and back direction on the upper portion of the window bracket [412]. Link levers #1 and #2 [45a, 45b] are connected with pivoting supports at these two attachment holes, respectively.

The link levers #1 and #2 [45a, 45b] have about the same length, and when the retractable roof [2] is in the operating position they each face forward at a raised angle, laid out in the front and back direction of the vehicle. These link levers #1 and #2 [45a, 45b] have through holes in their upper portions and lower portions. And, the link levers #1 and #2 [45a, 45b] have bushings inserted into the through holes at their lower portions, and are fixed to the upper portion of the window bracket [412] by a method such as a bolt. In this way the link levers #1 and #2 [45a, 45b] rotate with respect to an axis that extends in the width direction of the vehicle relative to the window bracket [412]. That is, the link levers #1 and #2 [45a, 45b] are connected by pivoting supports to the back window [23].

As explained later, an upper arm [47] is fixed to the upper portion of the middle roof panel [24], extending forward toward the front roof panel [21]. The upper portions of the link levers #1 and #2 [45a, 45b] are connected by pivoting supports to the upper arm [47]. That is, the link levers #1 and #2 [45a, 45b] are fixed to the lower portion of the upper arm [47] by the bushings that are inserted into the through holes on their upper sides by a method such as bolts. In this way, the link levers #1 and #2 [45a, 45b] rotate with respect to an axis that extends in the width direction of the vehicle relative to the upper arm [47] . That is, the link levers #1 and #2 [45a, 45b] are connected by pivoting supports to the middle roof panel [24].

In this way the link levers #1 and #2 [45a, 45b] are connected by pivoting supports to the middle roof panel [24] and to the rear window [23]. Therefore, link levers #1 and #2 [45a, 45b] function as a four-way link (the four-way link #2, [45]) that lies between the middle roof panel [24] and rear window [23], and controls the relative motion of the middle roof panel [24] and rear window [23].

A front roof bracket [413] is fixed near the back portion of the front roof panel [21]. The front portion of the upper arm [47] is connected by a pivoting support to the front roof bracket [413]. In other words, there is a through hole in the front portion of the upper arm [47], and a bushing is inserted in this through hole on the upper arm [47], to fix it to the front roof bracket [413] by a method such as a bolt. In this way the upper arm [47] rotates with respect to an axis that extends in the width direction of the vehicle relative to the front roof bracket [413]. That is, the upper arm [47] is connected by a pivoting support to the front roof panel [21]. The symbol [414] is a cover that is attached to the upper arm [47] to cover the upper arm [47] from below.

The front roof bracket [413] has another attachment hole, further back from the point of pivoting support (the attachment hole) to the upper arm [47]. This other attachment hole is connected by a pivoting support to the upper part of a control link [48].

When the retractable roof [2] is in the operating position, the control link [48] faces forward at a raised angle. Through holes are formed on the upper portion and lower portion of the control link [48]. And, a bushing is inserted into the through hole in the upper portion of the control link [48], fixing it to the attachment hole of the front roof bracket [413] by a method such as a bolt. In this way the control link [48] rotates with respect to an axis that extends in the width direction of the vehicle relative to the front roof panel [21]. That is, the control link [48] is connected by a pivoting support to the front roof panel [21].

An attachment hole is formed in the central portion of link lever #1 [45a]. The lower portion of the control link [48] is connected by a pivoting support to this attachment hole. In other words, a bushing is inserted into the through hole at the lower portion of the control link [48], and it is fixed to the central portion of link lever #1 [45a] by a method such as a bolt. Therefore, the control link [48] rotates with respect to an axis that extends in the width direction of the vehicle relative to link lever #1 [45a]. That is, the control link [48] is connected by a pivoting support to the four-way link #2 [45].

Next we use Figures 5 and 6 to provide a detailed explanation of the connection of the upper arm [47] and lower arm [43] to the middle roof panel [24] .

As explained above, the middle roof panel [24] comprises an outer panel [25], an inner panel [26], and a reinforcing member [27] that lies between these two panels [25, 26]. The upper arm [47] and lower arm [43] are rigidly connected to the reinforcing member [27].

The reinforcing member [27] is a plate-like material having a certain wave shape as its cross-section, and near its upper portion are provided two upper fixing portions [27a, 27a] to which the upper arm [47] is fixed, while near its lower portion is provided a lower fixing portion [27b] to which the lower arm [43] is fixed. These upper fixing portions [27a] and lower fixing portion [27b] are exposed within the vehicle passenger compartment [13].

Two fixing portions [47a, 47a] are formed on the rear portion of the upper arm [47]. The two fixing portions [47a] are in front and back, respectively, of the attachment holes to which link levers #1 and #2 [45a, 45b] are connected by pivoting supports. These fixing portions [47a] are fixed to the upper fixing portions [27a] of the reinforcing member [27] by a method such as bolts, so that the upper arm [47] is rigidly connected to the reinforcing member [27].

Also, the fixing portion [43b] of the lower arm [43] is fixed to the lower fixing portion [27b] of the reinforcing member [27] by a method such as a bolt, so that the lower arm [43] is rigidly connected to the reinforcing member [27].

As mentioned above, a cover [414] is attached so as to cover the upper arm [47] from below, and therefore the upper arm [47] is not exposed within the vehicle passenger compartment [13], to improve the appearance.

As explained above, the middle roof panel [24] is connected by a pivoting support to the front roof panel [21] via the upper arm [47], and is also connected by a pivoting support to the main bracket [42] via the lower arm [43]. Therefore, the middle roof panel [24] functions as one link of the pair of links that form the four-way link. Also, since the lower arm [43] is driven by the drive motor [41], this link functions as the driving link of the four-way link.

The other link (the driven link) of the pair of links that form the four-way link is comprised of the window link lever [44], rear window [43] (window bracket [412]), link levers #1 and #2 [45a, 45b], and the control link [48] .

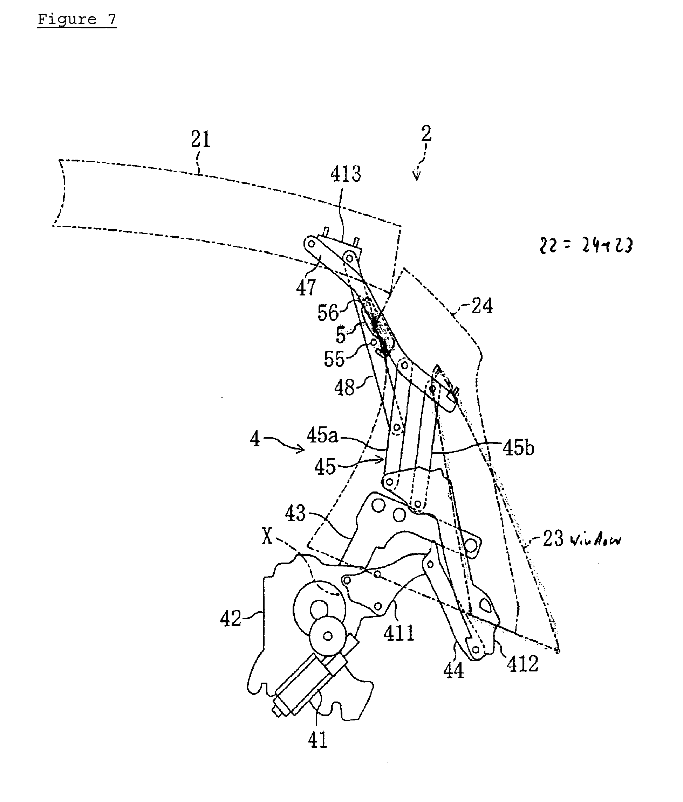

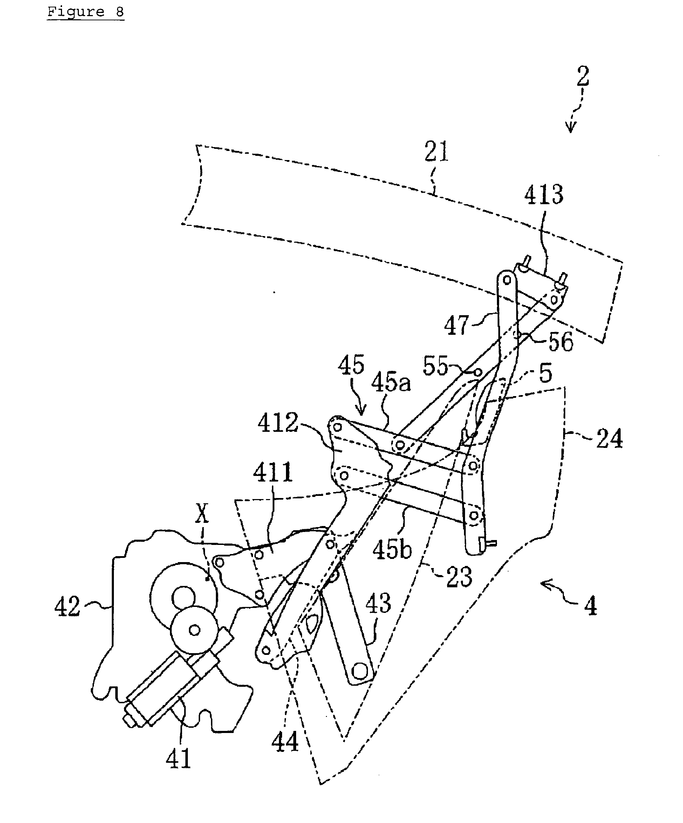

The retractable roof [2] with this structure operates as shown in Figures 3 and 7 through 9 to change its position from the operating position to the storage position. Figure 3 shows the retractable roof [2] when it is in the operating position (the operating configuration), Figure 9 shows the retractable roof [2] when it is in the storage position (the storage configuration), Figure 7 shows the retractable roof [2] during the process of changing its position from the operating position to the storage position after it has gone about one-third of the way from the operating position, and Figure 8 shows the retractable roof [2] during the process of changing its position from the operating position to the storage position after it has gone about two-thirds of the way from the operating position.

First, the drive motor [41] begins working, the torque increases due to the deceleration gear [43c], and the lower arm [43] begins rotating in the clockwise direction of Figure 3 around the axis of rotation X. Accompanying that rotation, the middle roof panel [24] begins to rotate in the clockwise direction (see Figures 3 and 7).

Accompanying the rotation of the middle roof panel [24], the front roof panel [21], which is connected by a pivoting support to the middle roof panel [24] (upper arm [47]), moves in the opposite upward slanting direction, but the control link [48] is connected by a pivoting support to the front roof panel [21], namely, there is a four-way link between the front roof panel [21] and the main bracket [42], and therefore the front roof panel [21] moves according to a prescribed path.

Also, accompanying the rotation of the middle roof panel [24], there is relative movement between this middle roof panel [24] and the rear window [23] due to the four-way link #2 [45]. In other words, the back window [23] rotates toward the back, while moving forward relative to the middle roof panel [24] that is rotating toward the back.

As the drive motor [41] continues working, the middle roof panel [24] rotates to be roughly on its side (see Figure 8). The front roof panel [21] moves further toward the back and is now located above the middle roof panel [24].

As the drive motor [41] still continues working, the middle roof panel [24] rotates further to the back and is stored in the storage compartment [12] (see Figure 9). At the same time, the front roof panel [21] moves downward so that it is directly above the middle roof panel [24] in the storage compartment [12]. In this way, the front roof panel [21] and middle roof panel [24] are folded one on top of the other. Also, the rear window [23] is folded on the middle roof panel [24] as seen along an axis that extends in the width direction of the vehicle.

The retractable roof [2] changes its position from the storage position to the operating position by a motion opposite to what was described above.

In the retractable roof [2], the middle roof panel functions as one link in the four-way link that is composed of a pair of links located between the front roof panel [21] and the main bracket [42]. In this way, there is one fewer link located within the vehicle passenger compartment [13], making the retractable roof lighter.

In particular, the upper arm [47] of the middle roof panel [24] is connected by a pivoting support to the front roof bracket [413] that is further to the front than the control link [48], so that the middle roof panel [24] becomes the link that is further to the front of the two links that are arranged front to back to form the four-way link. Therefore, this eliminates need for a link to be greatly extended into the vehicle passenger compartment [13] when the retractable roof [2] is in the operating position, and the link that is further to the rear of the two links is located away from the passengers.

Also, the rear link is composed of the window link lever [44], the rear window [23] (the window bracket [412]), link levers #1 and #2 [45a, 45b], and the control link [48]. In this way, by constructing the rear link out of multiple, comparatively small links that are connected to each other, it is unnecessary to have one long link connecting the front roof panel [21] and main bracket [42] to each other. This also means that such a link does not extend into the vehicle passenger compartment [13]. Therefore, the vehicle passenger compartment space is enlarged in the vertical direction. Also, avoiding one long link is effective in making the retractable roof [2] lighter.

Also, by making the middle roof panel [24] function as a link, it becomes unnecessary for the two links that form the four-way link to be displaced from each other in the width direction of the vehicle. Therefore, the vehicle passenger compartment space is enlarged in the width direction of the vehicle.

Making the vehicle passenger compartment space larger, both in the vertical direction and in the width direction of the vehicle, makes it more comfortable.

Also, the back window [23] can move relative to the middle roof panel [24], and when the retractable roof [2] is in the storage position the rear window [23] is folded over the middle roof panel [24] as seen along an axis that extends in the width direction of the vehicle, so it is possible to make the retractable roof [2] more compact in the vertical direction within the storage compartment [12], which also means that the storage compartment [12] can be made smaller.

Also, the synchronization of the operation that changes the position of the retractable roof [2] with the relative movement of the rear window [23] with respect to the middle roof panel [24] is made possible by the fact that the control link [48] is connected by a pivoting support to link lever #1 [45a], and the control link [48] contributes both to the operation that changes the position of the retractable roof [2] and to the relative movement of the rear window [23] with respect to the middle roof panel [24]. Therefore a new link is not needed to synchronize the operation that changes that position and relative movement, and this is effective from the points of view of enlarging the vehicle passenger compartment space, reducing the number of parts, and reducing the weight.

And, in a retractable roof [2] with this structure, it isn't shown in the figures, but weatherstripping is placed between the front roof panel [21] and the middle roof panel [24], and between the rear window [23] and the middle roof panel [24]. Therefore, as shown in Figure 3, the reaction of the weatherstripping in the operating position operates toward the front on the upper portion of the rear window [23], while operating in the upward direction on the rear portion of the front roof panel [21] (see the dotted line arrows in Figure 3). Also, in the operating position, the rear window [23] is leaning toward the front when it stands up, so its own weight exerts a force in the forward direction on the upper portion of the rear window [23].

The link mechanism [4] includes both the four-way link that is between the front roof panel [21] and the main bracket [42] as well as another four-way link (four-way link #2 [45]), so it is comparatively flexible. Therefore, that may hamper the seal between the middle roof panel [24] and the rear window [23].

So, in this retractable roof [2], a locking member [5] is attached to the middle roof panel [24] in order to maintain the seal between the middle roof panel [24] and back window [23] .

As shown in Figures 3, 4, and 10 (but omitted from Figure 5), this locking member [5] is attached through its cover [414] to approximately the center of the upper arm [47], and therefore it moves as a unit with the middle roof panel [24] .

The locking member [5] includes a hook [51] on its rear side and a cam [52] on its front side. When the retractable roof [2] is in the operating position the hook [51] opens toward the front, in a position to receive a pin from below (pin #1 [55]), as will be described later. The cam [52] is located on a curve that rises smoothly from both of its ends, facing the middle, and it hangs downward when the retractable roof [2] is in the operating position.

Two sleeves [53, 53] are fixed by respective bolts [54, 54] in the central portion of the control link [48], at a certain interval in the long direction of the link, and in this way the pin #1 [55] that engages the hook [51] of the locking member [5], and the pin #2 [56] that engages the cam [52], are formed.

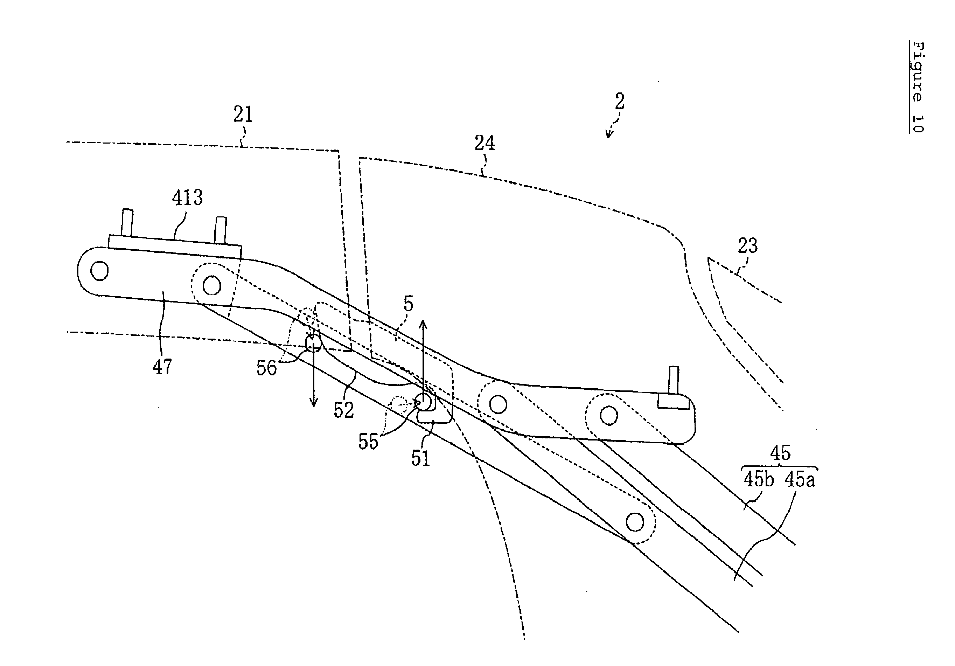

Based on this construction, when the retractable roof [2] switches from the storage position to the operating position, pin #1 [55] moves relative to the hook [51] and enters the hook [51] through its opening, while pin #2 [56] is facing toward the central portion of the cam [52] from its front edge, moving relative to it (see the dotted arrows in Figure 10). In this way, when the retractable roof [2] is in the operating position, pin #1 [55] engages the hook [51] to pull it upward, while pin #2 encounters cam #2 [52] to push it downward (see the solid arrows in Figure 10).

As a result, a moment in the counterclockwise direction in Figure 10 is given to the control link [48]. Based on this moment, a force is applied in the rear direction on the window bracket [412] and the upper portion of the rear window [23], and a force is applied in the downward direction on the rear portion of the front roof panel [21] (see the solid lines in Figure 3).

In this way, the front panel [21] and rear window [23] are tightly sealed against the middle roof panel [24], opposing forces such as the reaction of the weatherstripping, to maintain the seal between the front roof panel [21] and the middle roof panel [24], and the seal between the middle roof panel [24] and the rear window [23].

In this way the locking member [5] receives a moment relative to the control link [48] to maintain the seal between the front roof panel [21] and the middle roof panel [24], and the seal between the middle roof panel [24] and the rear window [23].

For example, if the locking member [5] only had a hook [51], making the control link [48] move parallel, on an upward angle toward the rear, then when it engaged the control link [48] an upward force would be given to the rear portion of the front roof panel [21], with the possibility of hampering the seal between the front roof panel [21] and the middle roof panel [24]. But, with the construction described above, that is, just by making the locking member [5] engage a single link (the control link [48]), it is possible to maintain the seal between the front roof panel [21] and the middle roof panel [24], and the seal between the middle roof panel [24] and the rear window [23], which aims at reducing the number of parts and simplifying the link construction.

Also, the locking member [5] is attached to the upper arm [47] and is difficult to see from within the vehicle passenger compartment, and only the pins [55, 56] are attached to the control link [48], so this is effective in improving the appearance.

In this embodiment the locking member [5] is attached to the upper arm [47], but if the locking member [5] were directly or indirectly fixed to the middle roof panel [24] then there would be no particular restrictions on where it was attached. Also, the locking member is not restricted to engaging with the control link [48] but, for example, may also engage the two link levers [45a, 45b].

Also, the shape of the locking member is not restricted to having a cam and a hook. For example, the locking member could be pins, and items such as a cam and hook could be attached to the links with which it engages, the opposite of this embodiment.

In this embodiment the control link [48] is connected by a pivoting support to link lever #1 [45a], but the retractable roof [2] would work the same way if the control link [48] were connected by a pivoting support to link lever #2 [45b]. Also, the retractable roof would work the same way if the control link [48] were connected by a pivoting support to the window bracket [412]. However, by having the control link [48] connected by a pivoting support to link lever #1 [45a], as described above, its length becomes shorter, which is advantageous for controlling how far it extends.

Also, in this embodiment, the middle roof panel [24] functions as a link, but a separate link could be provided to function as one of the links in the pair that form the four-way link.

In addition, the link mechanism [4] does not need to be driven by the drive motor [41], but rather a different rotation actuator would be possible, or an expansion actuator such as a hydraulic cylinder.

### Industrial Usability

As explained above, this invention uses a locking member that engages a rear window connecting link to apply force to the side of the rear window that is tightly sealed against the middle roof panel in order to improve the seal between the middle roof panel and the rear window, which can be used in a retractable roof for a vehicle.

### Bezugszeichenliste

- 1: Vehicle.
- 12: Storage compartment.
- 13: Vehicle passenger compartment.
- 2: Retractable roof (roof member).
- 21: Front roof panel.
- 22: Rear roof panel.
- 23: Rear window.
- 24: Middle roof panel.
- 4: Link mechanism.
- 44: Window link lever.
- 45: Four-way link (rear window connecting link).
- 45a: Link lever #1 (one pair of link levers).
- 45b: Link lever #2 (one pair of link levers).
- 48: Control link.
- 5: Locking member.
- 51: Hook.
- 52: Cam.
- 55, 56: Pins #1 and #2.

## Claims

1. A retractable roof (2) comprising a roof member (2) that covers a vehicle passenger compartment,
that has a link mechanism that changes the position of said roof member (2) between an operating position that covers said vehicle passenger compartment and a storage position where said roof member (2) is stored in a storage compartment located behind said vehicle passenger compartment so that said vehicle passenger compartment is open,
such that said roof member (2) includes a front roof panel (21) that covers the top of said vehicle passenger compartment, a rear window (23) that is located behind said front roof panel (21) and covers the back of said vehicle passenger compartment, and a middle roof panel (24) that is located between said front roof panel (21) and rear window (23),
and weatherstripping is provided between said front roof panel (21) and middle roof panel (24), and between said middle roof panel (24) and rear window (23),
and said link mechanism includes a rear window connecting link (45) that is directly or indirectly coupled to said rear window (23) and such that, when the position of said roof member (2) changes between said operating position and storage position, the rear window connecting link (45) moves said rear window (23) relative to said middle roof panel (24),
and such that there is a locking member (5) that is fixed directly or indirectly to said middle roof panel (24), and moves as a unit with said middle roof panel (24), and engages said rear window connecting link (45) when said roof member (2) is in the operating position, so as to apply a force to the side of said rear window (23) that is tightly sealed against said middle roof panel (24).

2. A retractable roof (2) as in Claim 1 such that
said link mechanism includes
a window link lever (44) that is connected with a pivoting support to said rear window (23) and to a member on the vehicle body,
a pair of link levers (45a, 45b) that form a four-way link (45) that is connected with a pivoting support to said rear window (23) and middle roof panel (24), and
a control link (48) that is connected with a pivoting support to one of said pair of link levers (45a, 45b) or to said rear window (23), and connected with a pivoting support to said front roof panel (21),
and said locking member (5) engages said control link (48), thereby contributing to the rotational moment of said control link (48) with respect to an axis in the width direction of the vehicle, so that it applies a force to the rear window side of said control link (48) against the side of said rear window (23) that is tightly sealed against the middle roof panel (24), while also applying a force to the side of said control link (48) that is on the front roof panel (21) against the side of said front roof panel (21) that is tightly sealed against the middle roof panel (24).

3. A retractable roof (2) as in Claim 2 such that
said middle roof panel (24) is connected with a pivoting support to said front roof panel (21) and to said member on the vehicle body.

4. A retractable roof (2) as in Claim 2 or 3 such that
said locking member (5) has a hook (51) that engages a pin #1 (55) located on the rear window side of said control link (48) and pulls said pin #1 (55) upward, and a cam (52) that engages a pin #2 (56) located on front roof panel (21) side of said control link (48) and pushes said pin #2 (56) downward.

5. A vehicle that has a retractable roof (2) as in any of Claims 1 through 4.
